# EUROPÄISCHE PATENTANMELDUNG

(11) **EP 1 847 168 A1**
(43) Veröffentlichungstag der Anmeldung: **24.10.2007**
(21) Anmeldenummer: 07007893.6
(22) Anmeldetag: 18.04.2007
(51) Int. Cl.: A01D 34/86, A01B 73/06

(54) **Mähgerät zum Freischneiden von Zaunpfählen**

(30) Priorität: 21.04.2006 DE 202006006420 U
(71) Anmelder: Barlage, Wilfried, 49626 Berge (DE)
(72) Erfinder: Barlage, Wilfried, 49626 Berge (DE)

(57) **Zusammenfassung**

Die Erfindung betrifft ein Mähgerät (1) zum Freischneiden von Zaunpfählen bzw. Hindernissen an Strassenrändern, das die überstehenden Hindernisse weitgehend umgreift und dabei den umstehenden Bewuchs abschneidet, welches in Arbeitsposition (A) rechtsseitig neben dem Fahrzeug (24) arbeitet, wobei ein Ausleger (9) mit Schneidwerkzeugen (27) den Anbaurahmen (2) quer zur Fahrtrichtung (F) verlängert und nahezu parallel zum Boden ausgerichtet ist und sowohl in Heckanbau als auch in Frontanbau des Fahrzeugs (24) betrieben werden kann und der Ausleger (9) zum Transport auf öffentlichen Straßen von der Arbeitsposition (A) in unterschiedliche Transportpositionen (T,T') verschwenkt werden kann.

## Beschreibung

Die Erfindung betrifft ein Mähgerät zum Freischneiden von Zaunpfählen bzw. Hindernissen an Strassenrändern (z. B. Leitplanken, überstehende Sträucher, Zäune), das die überstehenden Hindernisse weitgehend umgreift und dabei den umstehenden Bewuchs abschneidet nach dem Oberbegriff des Anspruchs 1.

Aus der Auslegeschrift der Patenanmeldung DE 1135233 sowie die Offenlegungsschrift DE 31 29 860 A1 sind artverwandte Mähgeräte bekannt. Diese Mähgeräte werden in an sich bekannter Weise mittels eines Anbaurahmens an einem Fahrzeug höhenverstellbar befestigt, und in Arbeitsposition mittels eines schwenkbaren Auslegers seitlich, in Fahrtrichtung rechts hinausragend, neben dem Mähfahrzeug betrieben. Am äußeren Ende des Auslegers befindet sich ein drehbeweglicher Schwenkarm, der als Verlängerung des Auslegers das Schneidwerkzeug trägt und dessen Drehbeweglichkeit durch eine Rastvorrichtung begrenzt ist. Gerät der Schwenkarm vor einem Hindernis, so wird die Rastvorrichtung außer Eingriff gebracht, und der Schwenkarm rotiert um seine Drehachse, bis erneut die Drehbewegung durch die Rastvorrichtung behindert wird.

Diese bekannten Mähgeräte müssen zum ordnungsgemäßen Arbeiten in einem relativ gleichmäßigen seitlichen Abstand zu den Hindernissen mit einem Fahrzeug gefahren werden, wobei das exakte Fahren durch den Anbau am Heck, sprich Heckanbau, des Fahrzeugs, aufgrund der Nichteinsicht auf das Arbeitsgerät, erschwert wird. Eine bessere Möglichkeit besteht darin, den Anbau des Arbeitsgerätes in Front, sprich Frontanbau, eines Fahrzeugs vorzunehmen, womit das exakte Fahren des Fahrzeugs während der Arbeit, durch den Einblick auf das Arbeitsgerät in Fahrtrichtung, deutlich einfacher ist. Weiterhin müssen derartige Mähgeräte zum Transport auf öffentlichen Straßen in ihrer Breite reduziert werden, da die zulässige Maximalbreite des Fahrzeuges, durch das in Arbeitsposition seitlich durch das vom Ausleger getragene Schneidwerkzeug, weit überschritten wird. Dieses wird in der Regel durch horizontales Schwenken des Auslegers um eine vertikale Schwenkachse ermöglicht. Aufgrund dieser Transportstellung ist es mit bekannten Mähgeräten nicht möglich, diese sowohl im Heckanbau als auch im Frontanbau am Fahrzeug zu betreiben.

Ausgehend vom genannten Stand der Technik liegt der Erfinder die Aufgabe zugrunde, das Mähgerät in seinen Eigenschaften so zu verbessern, daß es sowohl im Heckanbau eines Fahrzeugs als auch im Frontanbau eines Fahrzeugs ohne technische Veränderungen verwendet werden kann, und die dem Anbauzustand entsprechenden, unterschiedlichen Transportpositionen möglich sind.

Diese Aufgabe wird durch ein Mähgerät mit den Merkmalen des Anspruchs 1 gelöst, indem das Mähgerät aus einem Anbaurahmen, einem Ausleger, an dessen äußeren Ende ein drehbeweglicher Schwenkarm der als Verlängerung des Auslegers rotierende Schneidwerkzeuge trägt, und mindestens einem beide verbindenden, um eine vertikale Achse am Anbaurahmen schwenkbaren und über eine horizontale Achse am Ausleger schwenkbarem Zwischengelenk besteht. Die Positionen der Anlenkpunkte am Anbaurahmen und am Ausleger für das Zwischengelenk sind so gewählt, dass ein Schwenken des Auslegers von der Arbeitsposition in Transportstellung sowohl in Fahrtrichtung vor dem Anbaurahmen bzw. vor dem Fahrzeug als auch ein Schwenken entgegen der Fahrtrichtung hinter dem Anbaurahmen bzw. hinter dem Fahrzeug möglich ist. Durch eine mehrteilige Gelenkverbindung zwischen dem Anbaurahmen und dem Zwischengelenk, kann der Schwenkbereich des Zwischengelenks und des Auslegers in unterschiedliche Transportpositionen sowie in die Arbeitsposition geschwenkt und arretiert werden. Unter Mithilfe einer federbeaufschlagten Stellstange welche am Anbaurahmen über ein Gelenkauge auf ihrer Längsachse verschiebbar und mit der zuvor genannten mehrteiligen Gelenkverbindung verbunden ist, wird der Ausleger in der Arbeitsposition entgegen der Fahrtrichtung gehalten. Zusätzlich dient diese Ausführung beispielsweise als Unfallschutz, wenn nicht der drehbewegliche Schwenkarm, sondern versehentlich der Ausleger gegen ein starres Hindernis geführt werden sollte, da der Ausleger gegen die Wirkung der Feder gegenüber dem Anbaurahmen nach hinten schwenken kann.In Verlängerung der vertikalen Achse des Zwischengelenks ist eine weitere gelenkige Verbindung zwischen dem Anbaurahmen und dem Ausleger vorgesehen. Mit dieser gelenkigen Verbindung wird der Schwenkbereich des Auslegers, aufgrund der horizontalen Verbindungsachse am Zwischengelenk, begrenzt. Mittels eines Stellelements kann der Ausleger in Arbeitsposition neben der üblichen horizontalen Einstellung auch Neigungen von bis zu 95° nach oben, sprich eine annähernd vertikale Stellung als auch eine negative Neigung von bis zu -40° einnehmen. Dieses dient dazu, auch an extremen Einsatzgebieten wie z.B. Böschungen oder Gräben bzw. unebenen Gelände zu arbeiten. Als eine weitere mögliche Ausführung kann das Stellelement durch eine vom Fahrzeug aus zu bedienendes längenveränderbares Stellelement wie z.B. einem Hydraulikzylinder ersetzt werden.

Ausführungsbeispiele der Erfindung werden anhand der schematischen Zeichnungen nachfolgend näher erläutert. In den Zeichnungen sind jeweils das Mähgerät bzw. Teilansichten des Mähgeräts dargestellt. Gleiche bzw. gleich wirkende Bauteile sind in den sechs Zeichnungen mit denselben Bezugsziffern gekennzeichnet. Dabei zeigt
- Fig. 1: eine perspektivische Gesamt-Ansicht eines ersten Ausführungsbeispiels des Mähgerätes in Arbeitsposition welches am Heck eines Fahrzeugs angebaut ist.
- Fig. 2: eine perspektivische Gesamt-Ansicht des Mähgerätes in Arbeitsposition welches in Front eines Fahrzeugs angebaut ist.
- Fig. 3: eine Draufsicht des Mähgerätes in Transportposition welches in Front eines Fahrzeugs angebaut ist.
- Fig. 4: eine Draufsicht des Mähgerätes in Transportposition welches im Heck eines teilweise angedeuteten Fahrzeugs angebaut ist.

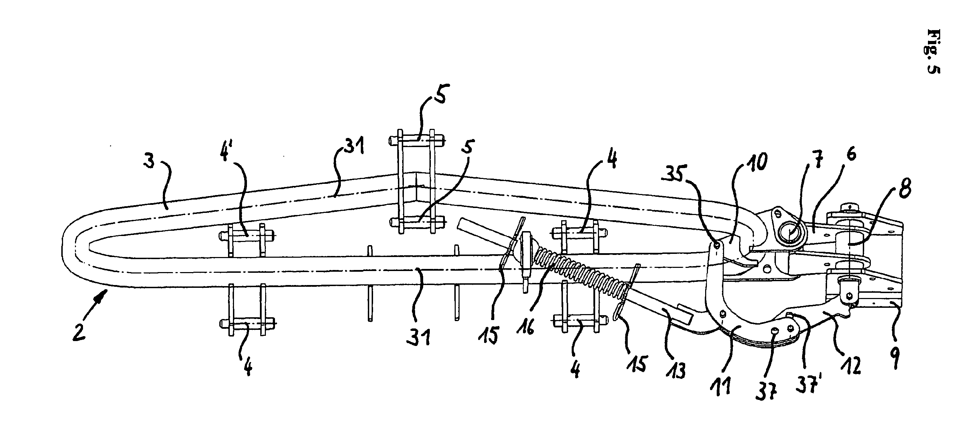

- Fig. 5: einen vergrößerten Ausschnitt des Mähgerätes aus Fig. 1.
- Fig. 6: einen weiteren vergrößerten Ausschnitt des Mähgerätes aus Fig. 1.
- Fig. 7: einen weiteren vergrößerten Ausschnitt des Mähgerätes aus Fig. 1 mit einem weiteren Ausführungsbeispiels.

Es ist mit 1 insgesamt ein Mähgerät bezeichnet, welches an einem Fahrzeug 24 im Heck, mittels eines Anbaurahmens 2 an dessen Dreipunkthubwerk, auf bekannter Weise lösbar befestigt ist. Dabei sind die zwei fest mit dem Rohrrahmen 3 des Anbaurahmens 2 verbundenen unteren Verbindungselemente 4, 4' und das in der Mitte zwischen den unteren Verbindungselementen 4, 4' fest mit dem Rohrrahmen 3 verbundene obere Verbindungselement 5 so ausgeführt, dass sie jeweils im Längsverlauf des Rohrrahmens 3, sprich quer zur Fahrtrichtung F des dargestellten Mähgerätes 1 sowohl vor als auch hinter dem Rohrrahmen 3 des Anbaurahmens 2 eine Anbaumöglichkeit zur lösbaren Befestigung an ein Fahrzeug 24 besitzen. Im weiteren Längsverlauf des Anbaurahmens 2 befindet sich rechtsseitig ein Ausleger 9 der über ein Zwischengelenk6 mit dem Anbaurahmen 2 verbunden ist. Das Zwischengelenk 6 ist im Längsverlauf rechtsseitig hinter dem Rohrrahmen 3 des Anbaurahmens 2 mittels einer vertikalen Achse 7 schwenkbar gelagert, und über eine horizontale Achse 8 am Ausleger 9 schwenkbar gelagert. Eine mit dem Anbaurahmen 2 fest verbundene Lasche 10 ist mit einer beispielsweise doppelten Winkellasche 11 drehbeweglich verbunden, diese ist wiederum andernends mit einer weiteren Lasche 12 drehbeweglich verbunden, welche wiederum am anderen Ende im Bereich der horizontalen Achse 8 drehbeweglich mit dem Zwischengelenk 6 verbunden ist. Die Winkellasche 11 weist in dem am Anbaurahmen 2 verbundenem winkeligen Teil eine weitere Querbohrung auf, an der drehbeweglich eine Schubstange 13 verbunden ist. Die Schubstange 13 wird mittels eines mit dem Anbaurahmen 2 fest verbundenem Gelenkauges 14 geführt. Die Schubtange 14 weist im horizontalen Verlauf zwei Bohrungen auf, in denen sich Splinte 15,15' als lösbare Sicherungselemente befinden. Der zur Fahrzeugmitte nähere Splint 15' liegt vor dem Gelenkauge 14 und verhindert ein Weiterschwenken des Auslegers 9 in Fahrtrichtung F. Zwischen dem zur Fahrzeugmitte weiteren Splint 15 und dem Gelenkauge 14 befindet sich ein beaufschlagtes Federelement 16, wobei dieses beispielsweise so ausgeführt ist, dass es die Schubstange 14 umschlingt, und der Splint 15 sowie das Gelenkauge 14 als Anschlag für das Federelement 16 dienen. Das beaufschlagte Federelement 16 hält mit dem vor dem Gelenkauge 14 liegendem Splint 15' sowie der gelenkigen Verbindung aus Winkellasche 11 und Lasche 12 den Ausleger 9 in die dargestellte Arbeitsposition, wobei ein Zurückschwenken des Auslegers 9 bei einer höheren Kraft als die des beaufschlagten Federelements 16, wie z.B. bei einer Kollision des Auslegers 9 während der Geradeausfahrt mit einem Hindernis, entgegengesetzt der Fahrtrichtung F möglich ist. Oberhalb des Zwischengelenks 6 im Bereich der verlaufenden vertikalen Achse 7 ist eine vertikale drehbewegliche Gestängeaufnahme 17 verbaut. Diese ist mit einem weiteren Gestänge 18 drehbeweglich verbunden, welches andernends mit einer Lasche 19 drehbeweglich verbunden ist. Die Lasche 19 ist an ihrem anderen Ende mit dem Ausleger 9 drehbeweglich verbunden. Oberhalb der Verbindung des Gestänges 18 mit der Gestängeaufnahme 17 ist eine Zugfeder 21 verbunden, dessen zweites Ende wiederum mit dem Gestänge 18 verbunden ist. Die Zugfeder 21 ist in der dargestellten Arbeitsposition A vorgespannt und dient als Entlastungselement für den Ausleger 9. Unterhalb des Gestänges 18 befindet sich ein veränderbares Stellelement 23, welches in Arbeitsposition A an der Gestängeaufnahme 17 anliegt und somit den Schwenkbereich, mittels der horizontalen Schwenckachse 8, des Auslegers 9 begrenzt.

Auf dem Ausleger 9 ist ein Hydraulikmotor 22 gelagert, der über einen unter dem Ausleger 9 befindlichen Keilriemen ein an dem gegenüberliegenden Ende des Auslegers 9 gelagerte mehrrillige Keilriemenscheibe antreibt. Darunter befinden sich drei sternförmig angeordnete Schwenkarme 26, die um eine vertikale Drehachse 25 drehbar gelagert sind. Jeder Schwenkarm 26 trägt ein Schneidwerkzeug 27, welches als Messerteller ausgestaltet ist, der mit Schneidmessern 28 bestückt ist. Die Schneidmesser 28 stellen Verschleißteile dar und sind auswechselbar, sie können beispielsweise auch gegen Mähfäden ausgewechselt werden. Die Abweiser 29 in Form von kreisbogenförmigen Bügeln halten etwa die Fläche frei, die von den Schneidmessern 28 des Schneidwerkzeugs 27 überstrichen wird, so dass beispielsweise bei der Annäherung an Hindernisse diese Hindernisse ebenso geschont werden wie die Schneidmesser 28 selbst, da die Abweiser 29 eine zu starke Annäherung der Messerteller an derartige Hindernisse verhindern. Von der mehrrilligen Keilriemenscheibe verläuft innerhalb jedes Schwenkarmes 26 ein Keilriemen zu dem jeweiligen Schneidwerkzeug 27 des Schwenkarms 26. Durch die Drehrichtung der Keilriemenscheibe und aufgrund der Lagerwiderstände ihrer Lagerung sowie aufgrund der Antriebswirkung dieses Keilriemens vom Hydraulikmotor 22 auf die mehrrillige Keilriemenscheibe sind die drei Schwenkarme 26, die als 3-strahliger Stern angeordnet sind, stets bestrebt, sich um die Drehachse 25 zu drehen. Diese Drehrichtung ist konstruktiv so ausgelegt, dass der diesen Ausleger 9 verlängernde, nach außen ragende Schwenkarm 26 nach hinten zu schwenken bestrebt ist, also bei dem nach rechts ragenden Ausleger im Uhrzeigersinn um die Drehachse 25 zu drehen bestrebt ist. Diese Drehbewegung wird durch eine Rastvorrichtung 30 behindert, die um eine vertikale Achse schwenkbar gelagert und mit dem Ausleger 9 fest verbunden ist, und durch eine mit dem am Ausleger 9 verbundene Zugfeder 20 gespannt ist. Auf einer die Drehachse 25 bildenden zentralen Welle der Schwenkarme 26 ist eine Kulissenscheibe 36 drehfest befestigt, so dass sich die Kulissenscheibe 36 gemeinsam mit diesen Schwenkarmen 26 dreht. Die Kulissenscheibe 36 weist drei Vorsprünge 38 auf, von denen einer vor der Rastvorrichtung 30 anliegt. Aufgrund der zuvor erwähnten Drehrichtung der mehrrilligen Keilriemenscheibe und aufgrund der Lagerverluste an den Schneidwerkzeugen 27 und der Keilriemenscheibe wird bei Betrieb des Mähgerätes 1, also bei laufendem Hydraulikmotor 22, die Anordnung der drei Schwenkarme 26 in der aus der Zeichnung ersichtlichen Anordnung gehalten, bei welcher die Kulissenscheibe 36 mit einem gewissen Druck an der Rastvorrichtung 30 anliegt. In dieser Anordnung verlängert einer der drei Schwenkarme 26 den Ausleger 9 nach außen, also in der vom Fahrzeug 24 weg weisenden Richtung. Oberhalb der Kulissenscheibe 36 ist in der Schutzabdeckung 33 ein einstellbares Bremselement 34 befestigt, welches auf der Kulissenscheibe einen Auflagedruck ausübt und somit die vorgespannte Rastvorrichtung 30 zusätzlich unterstützt. Gerät dieser nach außen ragende Schwenkarm 26 nun gegen ein Hindernis, wie beispielsweise einen Pfosten, erhöht sich dadurch der Druck, mit dem der Vorsprung 38 der Kulissenscheibe 36 vor der Rastvorrichtung 30 anliegt. Bei entsprechendem Druck gibt die Rastvorrichtung 30 nach. Gegen die Wirkung der Zugfeder 34 wird auf dieser Weise die Rastvorrichtung 30 um deren Schwenkachse verschwenkt und außer Eingriff mit der Kulissenscheibe 36 gebracht. Der dem Pfosten anliegende Schwenkarm 26 kann also entgegen der Fahrtrichtung F des Fahrzeugs 24 dem Hindernis nach hinten ausweichen, und wird dabei um die Drehachse 25 gemeinsam mit den beiden Schwenkarmen 26 verschwenkt. Sobald der Vorsprung 38 der Kulissenscheibe 36 an der Rastvorrichtung 30 entlang gelaufen ist, wird die Rastvorrichtung 30 unter Wirkung der Zugfeder 34 wieder zurück bewegt. Dabei läuft die Kulissenscheibe 36 der Rastvorrichtung 30 soweit entlang, bis der in Drehrichtung nächste Vorsprung 38 vor der Rastvorrichtung 30 anliegt, und auf dieser Weise die Schwenkbewegung der sternförmigen angeordneten Schwenkarme 26 unter Mithilfe des Bremselements 34 gebremst wird. Im diesem Zustand sieht die Anordnung genauso aus wie bei dem dargestellten Ausführungsbeispiel, nur dass die drei Schwenkarme 26 in Drehrichtung eine Drehbewegung von 120° vorgenommen haben.

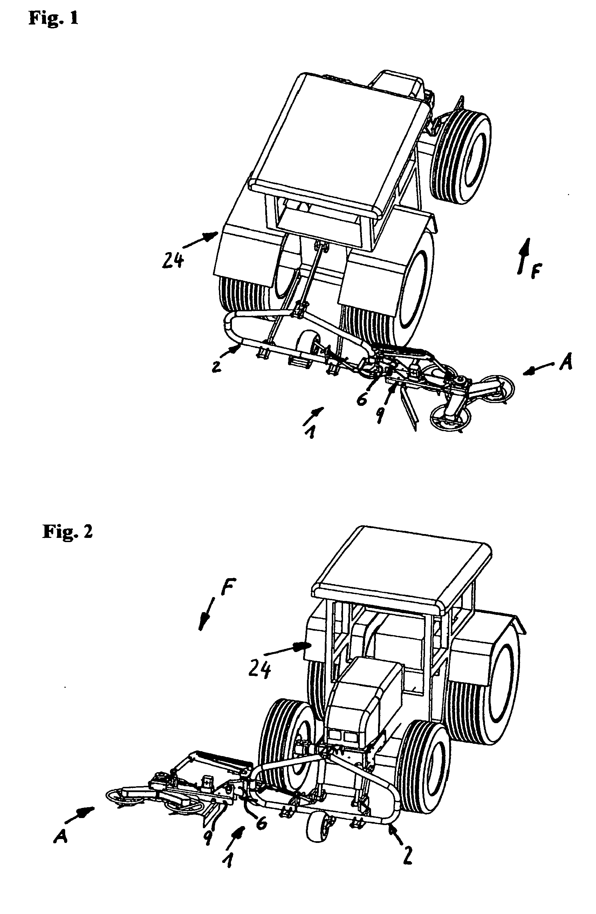

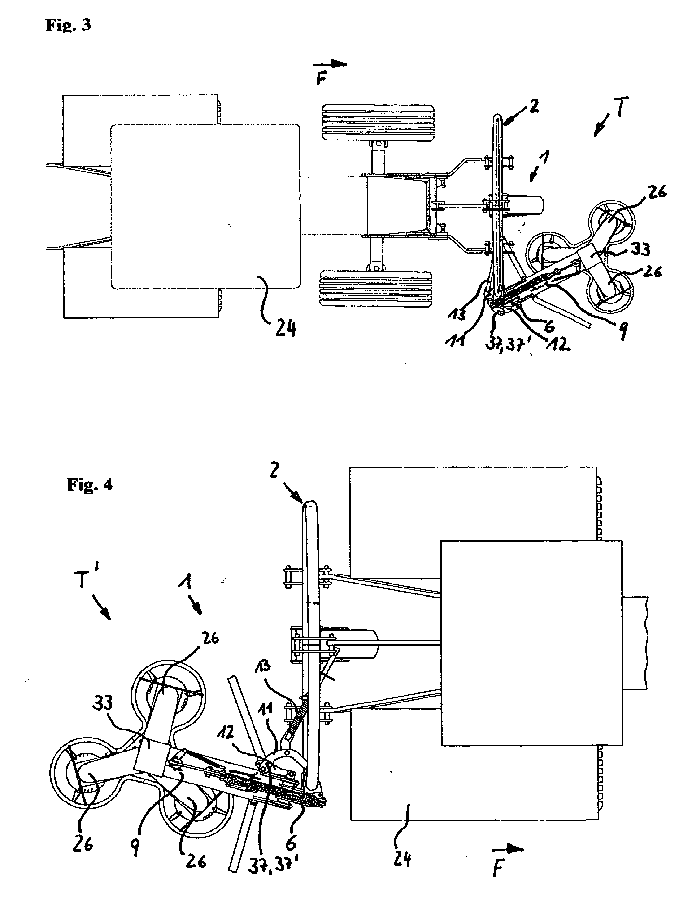

Fig. 3 zeigt als Draufsicht das Mähgerät 1 in Transportstellung T, welches an einem schematisch angedeuteten Fahrzeug 24 in Front an dessen Dreipunkthubwerk lösbar befestigt ist. Dabei ist der Ausleger 9 in Verbindung mit dem Zwischengelenk 6 um die vertikale Achse 7 in Fahrtrichtung F vor dem Anbaurahmen 2 bzw. vor dem Fahrzeug 24 geschwenkt. In dieser Transportstellung T hat sich unter anderem die Position der Winkellasche 11 und der Lasche 12 gegenüber der in Fig.1 dargestellten Arbeitsposition A zum Anbaurahmen 2 und dem Ausleger 9 geändert. In der dargestellten Ausführung sind sowohl in der Winkellasche 11 als auch der Lasche 12 weitere Löcher 37, 37' von annähernd gleichem Durchmesser, die in dieser Transportposition T annähernd konzentrisch übereinander stehen. Durch einen zylindrischen Absteckbolzen kann in dieser Transportstellung T mittels Abstecken durch die zuvor erwähnten Bohrungen 37, 37' eine Arretierung vorgenommen werden.

Fig. 4 zeigt als Draufsicht das Arbeitsgerät 1 in Transportstellung T', welches an einem schematisch angedeutetem Fahrzeug 24 im Heck an dessen Dreipunkthubwerk lösbar befestigt ist. Dabei ist der Ausleger 9 in Verbindung mit dem Zwischengelenk 6 um die vertikale Achse 7 entgegen der Fahrtrichtung F hinter dem Anbaurahmen 2 bzw. hinter dem Fahrzeug 24 geschwenkt. In dieser Transportstellung T' hat sich unter anderem die Position der Winkellasche 11 und der Lasche 12 gegenüber der in Fig.1 dargestellten Arbeitsstellung A zum Anbaurahmen 2 und dem Ausleger 9 geändert. In der dargestellten Ausführung sind sowohl in der Winkellasche 11 als auch der Lasche 12 weitere Löcher 37,37' von annähernd gleichem Durchmesser, die in dieser Transportposition T' konzentrisch übereinander stehen. Durch einen zusätzlichen zylindrischen Absteckbolzen kann in dieser Transportstellung T' mittels Abstecken durch die zuvor erwähnten Bohrungen 37, 37' eine Arretierung vorgenommen werden.

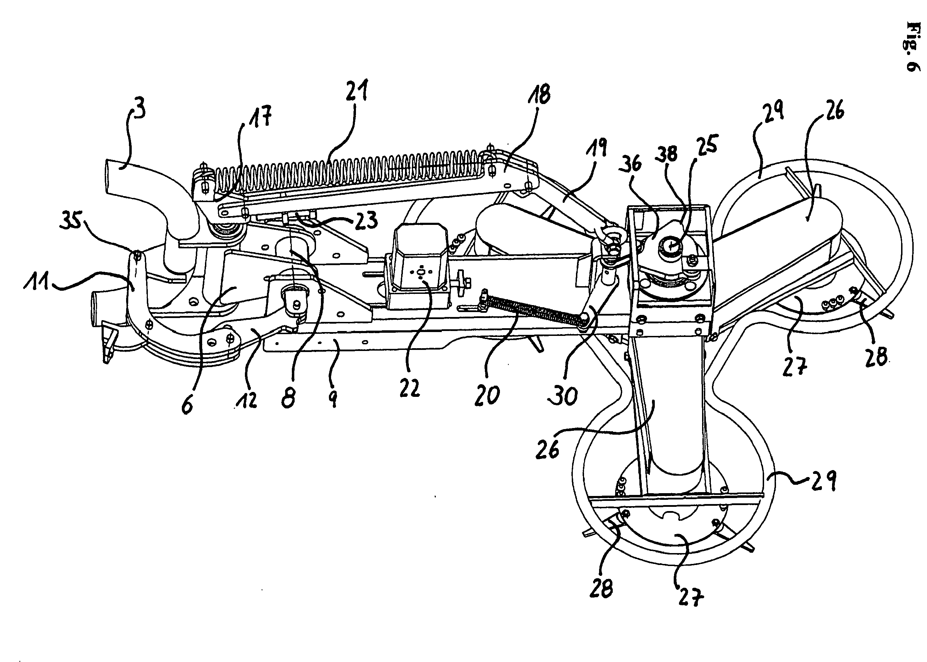

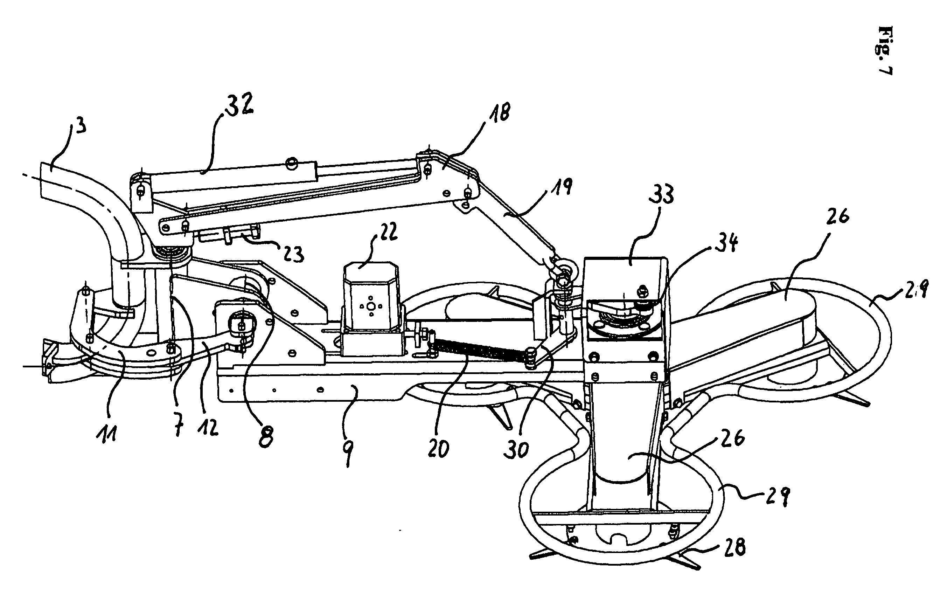

In Fig. 7 ist als Ausführungsbeispiel die zuvor in Fig. 6 dargestellte Zugfeder 21 durch ein längenveränderbares Stellelement (32) in Form eines Hydraulikzylinders ersetzt.

### Bezugszeichenliste

- 1: Mähgerät
- 2: Anbaurahmen
- 3: Rohrrahmen
- 4, 4': unteres Verbindungselement
- 5: oberes Verbindungselement
- 6: Zwischengelenk
- 7: vertikale Schwenkachse
- 8: horizontale Schwenkachse
- 9: Ausleger
- 10: Lasche
- 11: Winkellasche
- 12: Lasche
- 13: Schubstange
- 14: Gelenkauge
- 15,15': Sicherungselement
- 16: Federelement
- 17: Gestängeaufnahme
- 18: Gestänge
- 19: Lasche
- 20: Zugfeder
- 21: Zugfeder
- 22: Hydraulikmotor
- F: Fahrtrichtung
- A: Arbeitsstellung
- T: Transportstellung im Frontanbau
- T': Transportstellung im Heckanbau

- 23: Stellelement
- 24: Fahrzeug
- 25: Drehachse
- 26: Schwenkarm
- 27: Schneidwerkzeug
- 28: Schneidmesser
- 29: Abweiser
- 30: Rastvorrichtung
- 31: Rohrrahmenmittelachse
- 32: Stellmittel
- 33: Schutzabdeckung
- 34: Bremselement
- 35: Verbindungsstelle
- 36: Kulissenscheibe
- 37,37': Löcher
- 38: Vorsprung

## Patentansprüche

1. Mähgerät (1) zum Freischneiden von Zaunpfählen bzw. Hindernissen an Strassenrändern, das die überstehenden Hindernisse weitgehend umgreift und dabei den umstehenden Bewuchs abschneidet, welches in Arbeitsposition (A) rechtsseitig neben dem Fahrzeug (24) arbeitet, wobei der Ausleger (9) den Anbaurahmen (2) quer zur Fahrtrichtung (F) verlängert und nahezu waagerecht bzw. parallel zum Boden ausgerichtet ist und sowohl im Heckanbau eines Fahrzeugs (24) als auch im Frontanbau eines Fahrzeugs (24) betrieben und auf öffentlichen Straßen transportiert werden kann, **dadurch gekennzeichnet dass** das Zwischengelenk (6) mit dem Ausleger (9) sowohl in Fahrtrichtung (F) vor dem Anbaurahmen (2) aus der Arbeitsposition (A) in die Transportstellung (T) als auch entgegengesetzt der Fahrtrichtung (F) hinter dem Anbaurahmen (2) aus der Arbeitsposition (A) in die Transportstellungen (T') um die vertikale Schwenkachse (7) schwenkbar ist.

2. Mähgerät (1) nach Anspruch 1, **dadurch gekennzeichnet, dass** ausgehend von der Arbeitsposition (A) das Zwischengelenk (6) mit dem Ausleger (9) um die vertikale Schwenkachse (7) vorzugsweise in Fahrtrichtung (F) bis zu 120 DEG entgegen der Fahrtrichtung (F) und bis zu -120 DEG jeweils in eine Transportstellung (T,T') schwenkbar ist, und der Schwenkbereich, durch die gelenkige Verbindung aus Winkellasche (11), Lasche (12) und der Schubstange (14) zwischen Anbaurahmen (2) und Zwischengelenk (6), begrenzt wird.

3. Mähgerät (1) nach Anspruch 1, **dadurch gekennzeichnet, dass** ausgehend von der Arbeitsposition (A) der Ausleger (9) um die horizontale Schwenkachse (8) zur Anpassung an Mähgegebenheiten vorzugsweise bis zu -40 DEG nach unten und bis 95 DEG nach oben schwenkbar ist, und der Schwenkbereich, durch die gelenkige Verbindung, aus Gestängeaufnahme (17), Gestänge (18) und der Lasche (19) zwischen Zwischengelenk (6) und Ausleger (9), begrenzt wird.

4. Mähgerät (1) nach Anspruch 1, **dadurch gekennzeichnet, dass** der Anbaurahmen (2) mit unteren Verbindungselementen (4,4') und einem oberen Verbindungselement (5) versehen ist, die parallel zur Rohrrahmenmittelachse (31) des Rohrrahmens (3) sowohl vor als auch hinter dem Rohrrahmen (3) Verbindungsmöglichkeit zum Fahrzeug (24) aufweisen.

5. Mähgerät (1) nach einem oder mehreren der vorgenannten Ansprüche, **dadurch gekennzeichnet, dass** am Anbaurahmen (2) die Schwenkachse (7) außerhalb des Rohrrahmens (3) und nahezu in Verlängerung der Rohrrahmenmittelachse (31) angeordnet ist, und an der das Zwischengelenk (6) durch die Schwenkachse (7) schwenkbar gelagert ist.

6. Mähgerät (1) nach einem oder mehreren der vorgenannten Ansprüche, **dadurch gekennzeichnet, dass** der Anbaurahmen (2) eine Lasche (10) mit einer Verbindungsstelle (35) für die Winkellasche (11) aufweist, die innerhalb des Rohrrahmens (3) angeordnet ist, und die Mittelachse der Verbindungsstelle (35) nahezu parallel zur vertikalen Schwenkachse (7) und waagerecht annähernd fluchtend mit der Schwenkachse (8) angeordnet ist, und die Mittelachse der Verbindungsstelle (35) annähernd fluchtend mit der Rohrrahmenmittelachse (31) ist.

7. Mähgerät (1) nach einem oder mehreren der vorgenannten Ansprüche, **dadurch gekennzeichnet, dass** Lasche (12) drehbeweglich mit der Winkellasche (11) und in Verlängerung der horizontalen Schwenkachse (8) in Fahrtrichtung (F) hinter dem Ausleger (2) drehbeweglich mit dem Zwischengelenk (6) verbunden ist.

8. Mähgerät (1) nach einem oder mehreren der vorgenannten Ansprüche, **dadurch gekennzeichnet, dass** der Anbaurahmen (2) ein Gelenkauge (14) aufweist welches innerhalb des Rohrrahmens (3) zwischen den unteren Verbindungselementen 15 und 15' angeordnet ist, und die Schubstange (14) verschieblich führt.

9. Mähgerät (1) nach Anspruch 8, **dadurch gekennzeichnet, dass** die Schubstange (14) mit der Winkellasche (11) drehbeweglich verbunden ist und Bohrungen aufweist durch die Sicherungselemente (15',15) lösbar gesteckt sind, wobei das Sicherungselement (15') zur Fahrzeugmitte in Arbeitsposition (A) vor dem Gelenkauge (14) anliegt und das Sicherungselement (15) zur Fahrzeugmitte in Arbeitsposition (A) hinter dem Gelenkauge positioniert ist.

10. Mähgerät (1) nach einem der Ansprüche 8 oder 9, **dadurch gekennzeichnet, dass** zwischen dem Gelenkauge (14) und dem Sicherungselement (15) ein beaufschlagtes Federelement (16) angeordnet ist; welches ein Schwenken des Zwischengelenks (6) mit dem Ausleger (9) in Arbeitsposition (A) um die vertikale Schwenkachse (7) beim Auftreffen auf ein Hindernis entgegengesetzt der Fahrtrichtung (F) ermöglicht, und das Federelement (16) als Rückstellelement dient, welches das eingeschwenkte Zwischengelenk (6) mit dem Ausleger (9) nach passieren des Hindernisses wieder in die Arbeitsposition (A) zurück schwenkt.

11. Mähgerät (1) nach Anspruch 10, **dadurch gekennzeichnet, dass** das Federelement (16) als Gasdruckfeder ausgebildet ist und am Gelenkauge (14) und der Schubstange (14) befestigt ist.

12. Mähgerät (1) nach einem oder mehreren der vorgenannten Ansprüche, **dadurch gekennzeichnet, dass** das Zwischengelenk (6) mit den einander schneidenden Schwenkachsen (7,8) als Kreuzgelenk ausgebildet ist.

13. Mähgerät (1) nach einem oder mehreren der vorgenannten Ansprüche, **dadurch gekennzeichnet, dass** die Lasche (19) drehbeweglich mit dem Gestänge (18) und dem Ausleger (9) verbunden ist, und die Gestängeaufnahme (17) ebenfalls drehbeweglich mit dem Gestänge (18) und in Verlängerung der vertikalen Schwenkachse (7) drehbeweglich mit dem Zwischengelenk (6) verbunden ist.

14. Mähgerät (1) nach einem oder mehreren der vorgenannten Ansprüche, **dadurch gekennzeichnet, dass** zwischen der Gestängeaufnahme (17) und dem Gestänge (18) eine beaufschlagte Zugfeder (21) angeordnet ist.

15. Mähgerät (1) nach Anspruch 14, **dadurch gekennzeichnet, dass** anstatt der Zugfeder (21) ein längenveränderbares Stellmittel (32) verwendet wird.

16. Mähgerät (1) nach Anspruch 15, **dadurch gekennzeichnet, dass** das längenveränderbare Stellmittel (32) als Hydraulikzylinder ausgeführt ist.

17. Mähgerät (1) nach einem oder mehreren der vorgenannten Ansprüche, **dadurch gekennzeichnet**, das ein Bremselement (34) oberhalb der Kulissenscheibe (36) angeordnet ist und einen Auflagedruck auf die Kulissenscheibe ausübt..

18. Mähgerät (1) nach Anspruch 21, **dadurch gekennzeichnet, daß** das Bremselement (34) mit der Schutzabdeckung (33) verstellbar verbunden ist.
